Europäisches Patentamt

European Patent Office

Office européen des brevets

(19)

(11) Veröffentlichungsnummer : **0 121 195**
**B1**

(12) **EUROPÄISCHE PATENTSCHRIFT**

(45) Veröffentlichungstag der Patentschrift :
27.05.87

(51) Int. Cl.⁴ : **B 65 G 47/40**

(21) Anmeldenummer : 84103225.3

(22) Anmeldetag : 23.03.84

(54) **Pendelnd aufgehängter Becher mit Steuerkurve für einen Becherförderer.**

(30) Priorität : 30.03.83 DE 3311544

(43) Veröffentlichungstag der Anmeldung :
10.10.84 Patentblatt 84/41

(45) Bekanntmachung des Hinweises auf die Patenterteilung : 27.05.87 Patentblatt 87/22

(84) Benannte Vertragsstaaten :
AT BE CH FR GB IT LI NL

(56) Entgegenhaltungen :
DE-A- 2 730 956
DE-B- 2 546 748
US-A- 1 048 834

(73) Patentinhaber : Hans Holger Wiese GmbH & Co. KG
Fuhrberg
D-3006 Burgwedel 2 (DE)

(72) Erfinder : Wiese, Hans Holger
Fuhrberg
D-3000 Burgwedel 2 (DE)

(74) Vertreter : Arendt, Helmut, Dipl.-Ing.
Hubertusstrasse 2
D-3000 Hannover 1 (DE)

## Beschreibung

Die Erfindung betrifft den Becher eines Becherförderers mit zwei seitlichen Zugelementen, zwischen welchen der Becher mit einer quer zur Förderrichtung angeordneten Achse pendelnd aufgehängt ist und eine seitlich angeordnete Steuerkurve sowie ein zugehöriges Halteteil aufweist, in welche ein ortsfestes, in die Bewegungsbahn der Becher schwenkbares Steuerglied zum Kippen des Bechers eingreift.

Durch die DE-PS-25 46 748 ist ein Pendelbecherförderer mit endlosen Zuggliedern bekannt, dessen Becher mit seitlichen Steuerkurven ausgerüstet sind, die sich von einem radial von der Pendelachse entfernt und in Förderrichtung des Bechers vorn und oberhalb der Pendelachse liegenden Punkt zur Pendelachse hin schräg nach unten erstrecken. In eine solche Kurve greift eine Steuerrolle, um den Becher zum Kippen zu bringen. Durch die Form der Steuerkurve soll ein abruptes Anstoßen von Teilen vermieden werden. Diese Aufgabe ist jedoch mit der gezeigten Lösung nur teilweise erreichbar, da die Schräge der Steuerkurve im Anschlagbereich der Steuerrolle nur einen geringen Neigungswinkel aufweisen kann. Mit ihrem radial äußeren Bereich, also dem Anschlagbereich der Steuerrolle, schleift sie nämlich bei gekippter Becherstellung an der Unterseite einer Halteschiene entlang, wodurch das sofortige Zurückpendeln des Bechers nach dem Ankippen in seine Ausgangslage vermieden und der Auskippvorgang nicht zu früh beendet werden soll. Neben der fehlenden Möglichkeit, den Neigungswinkel der Schräge beliebig zu gestalten, führt das ständige Entlangschleifen der Steuerkurve an der Unterseite der Halteschiene, insbesondere beim Transport von Fördergut mit stark korrosiven Eigenschaften, zu einem vorzeitigen Abrieb und einer unerwünschten Veränderung der Form der Steuerkurve.

Der Erfindung liegt die Aufgabe zugrunde, die Steuerkurve des Bechers so zu gestalten, daß eine nahezu erschütterungsfreie Einleitung der Kippbewegung der Becher erreichbar ist und darüberhinaus ein frühzeitiger Abrieb der Steuerkurve vermieden werden kann. Die erfindungsgemäße Lösung zeichnet sich durch die im Patentanspruch 1 angegebenen Merkmale aus.

Vorzugsweise ist die Steuerkurve mit ihrem vorderen Teil als Gerade mit konstanter Steigung ausgebildet, welche in einen hinteren, mit einer zunehmenden Steigung versehenen Kurventeil übergeht. Die Steigung des vorderen Kurventeils kann etwa 10° betragen. Dadurch wird ein nahezu erschütterungsfreier Einlauf erreicht. Beim Ankippen des Bechers läuft das in die Bewegungsbahn des Bechers geschwenkte Steuerglied mit rollender Reibung auf der Steuerkurve ab. Die Steuerkurve erfährt bis zur Endlage eine im wesentlichen vertikale Ausrichtung und kommt mit der Halteschiene, die für ein längeres Halten des Bechers in der Kippstellung sorgt, nicht in Berührung. Durch die Ausbildung der Steuerkurve wird also gleichzeitig der Vorteil eines sehr geringen, fast vernachlässigbaren Abriebs erreicht.

Das Halteteil, das für die Einhaltung einer Kippstellung über einen längeren Zeitraum sorgt, kann entweder seitlich versetzt zur Steuerkurve an der gleichen Becherseite oder aber an der der Steuerkurve gegenüberliegenden Becherseite angeordnet sein. Da es einem höheren Verschleiß unterliegt, ist vorteilhafterweise für eine Austauschbarkeit durch eine lösbare Befestigung gesorgt.

In der Zeichnung ist ein Ausführungsbeispiel der Erfindung rein schematisch dargestellt und nachstehend erläutert. Darin zeigen :

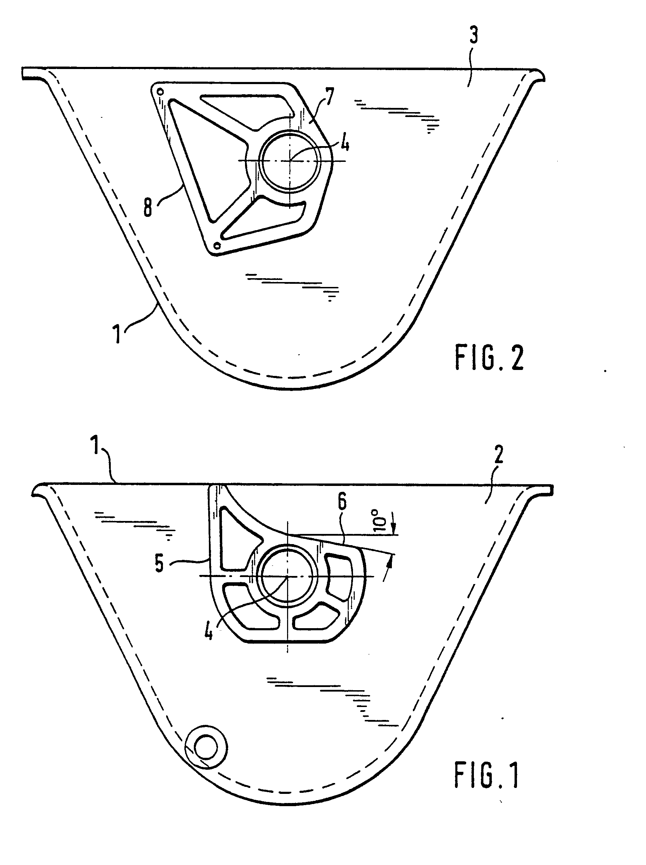

Figur 1 die Seitenansicht eines Bechers mit der Draufsicht auf die Steuerkurve

Figur 2 die Seitenansicht eines Bechers mit der Haltekurve

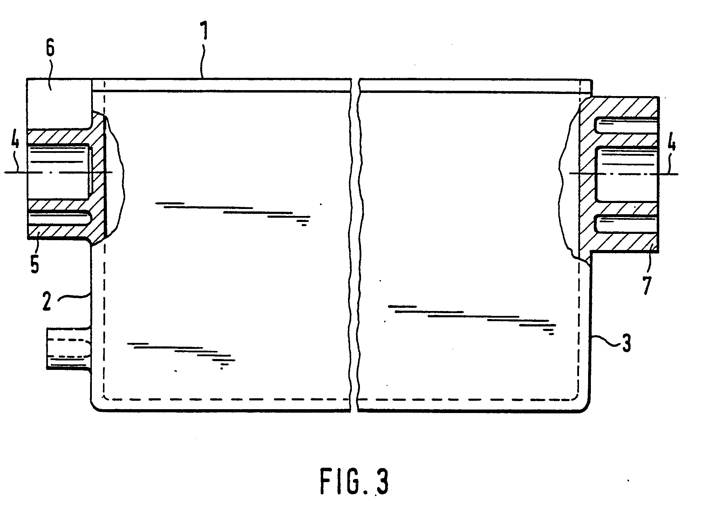

Figur 3 die Draufsicht auf die in Förderrichtung vorn befindliche Längsseite des Bechers gemäß Figuren 1 und 2

Figur 4 den Ablauf einer Kippbewegung.

Der muldenförmige Becher 1 ist an seinen Seitenflächen 2 und 3 pendelartig aufgehängt. Die Pendelachse ist mit 4 bezeichnet. Als seitlicher Vorsprung ist die mit der Seitenfläche 2 aus einem Stück gearbeitete Steuerscheibe 5 ausgebildet. An ihrer Oberseite befindet sich die Steuerkurve 6, die mit ihrem vorderen Einlaufteil als Gerade mit einem Neigungswinkel von etwa 10° ausgebildet ist. Die in Förderrichtung hintere Hälfte der Steuerkurve ist mit einer zunehmenden Steigung versehen. Dadurch wird zunächst für einen horizontal-tangentialen Einlauf mit einem Kippmoment gesorgt, welches kontinuierlich ansteigend bis zur gekippten Endlage des Bechers zunimmt.

Die der Seitenfläche 2 gegenüberliegende Seitenfläche 3 zeigt im dargestellten Beispiel die Anordnung eines weiteren Kurvenkörpers 7 mit dem als Gerade ausgebildeten Halteteil 8.

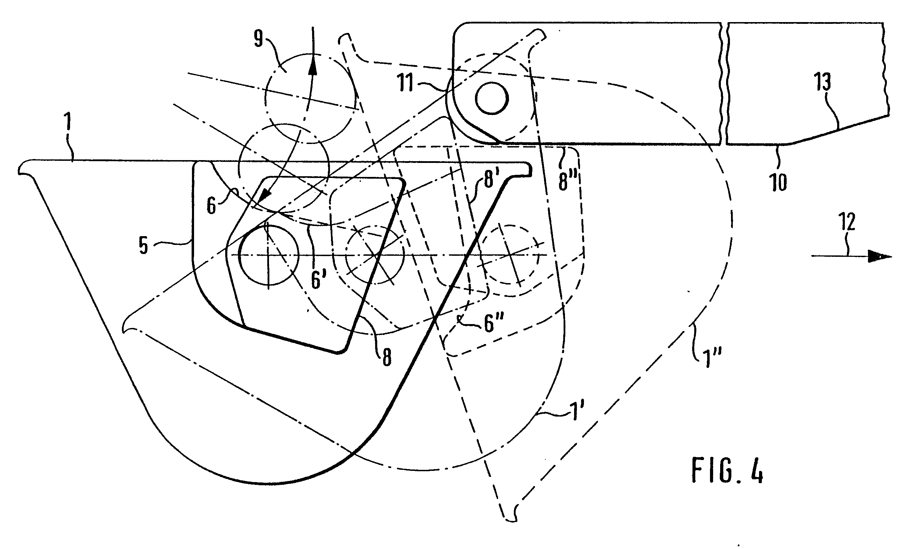

Zu Einleitung der Kippbewegung wird das Steuerglied, im gezeigten Beispiel in Gestalt einer Steuerrolle 9, in die Bewegungsbahn des Förderbechers 1 geschwenkt. Die Halteschiene 10 dient zur Fixierung der Kippendlage des Förderbechers für einen gewünschten Zeitraum durch die Anlage des Halteteils 8 an deren Unterseite (Figur 4). An der Einlaufkante der Halteschiene 10 ist eine Übernahmerolle 11 angeordnet, die für ein weiches und reibungsarmes Übernehmen des Halteteils 8 bis zu seiner Anlage an der Unterseite der Halteschiene 10 sorgt.

In seiner Grundstellung nimmt der Förderbecher 1 bis zum Eingriff der Steuerrolle 9 in seine Bewegungsbahn die in Figur 4 in linker Position gezeichnete Stellung ein. Die Rolle 9 sorgt bei ihrem Einlauf in die Steuerkurve 6, sobald sie deren Mittelpunkt vertikal über der Pendelachse erreicht hat, für eine Kippbewegung des Bechers, dessen Endlage beim Erreichen des oberen Endes der Steuerkurve 6 mit 1' bezeichnet ist. In diesem Moment legt sich das Halteteil 8 mit seiner nach oben weisenden Kante an die Übernahmerolle 11 an. Durch die weitere Fortschrittsbewegung in Richtung des Pfeiles 12 wird die weitere Kippbewegung nunmehr durch das Halteteil 8 übernommen, das unter der Einwirkung der Halteschiene 10 den Becher so weit kippt, bis das Halteteil 8 in der mit 1″ gezeichneten Lage an der Unterseite der Halteschiene 10 zur Anlage kommt. Dies ist die äußerste Kipplage des Bechers. Sobald der Becher die Halteschiene 10 verlassen hat, kann er in seine Ursprungslage zurückpendeln. Die Schräge 13 am hinteren Ende der Halteschiene 10 sorgt für eine zunächst kontinuierliche Rückführung des Bechers in seine Ursprungslage, um zu vermeiden, daß der Becher beim schlagartigen Rückfallen in seine Ausgangslage eine länger andauernde Pendelschwingung ausführt.

Durch den nahezu horizontal-tangentialen Einlauf der Steuerrolle 9 in die Steuerkurve 6 wird für ein äußerst sanftes, erschütterungsfreies Ankippen des Bechers bis in seine Endlage gesorgt. Der Vorgang wird ebenso ruhig ohne abruptes Zurückschwenken durch die Schräge 13 am Ende der Halteschiene 10 bewirkt.

**Patentansprüche**

1. Becher eines Becherförderers mit zwei seitlichen Zugelementen, zwischen welchen der Becher mit einer quer zur Förderrichtung angeordneten Achse pendelnd aufgehängt ist und eine seitlich angeordnete Steuerkurve sowie ein zugehöriges Halteteil aufweist, in welche ein ortsfestes, in die Bewegungsbahn des Bechers schwenkbares Steuerglied zum Kippen des Bechers eingreift, dadurch gekennzeichnet, daß sich die Steuerkurve (6) in Förderrichtung von einem Punkt vor der Pendelachse (4) mit einer Steigung nach oben und hinten erstreckt und das als Gerade ausgebildete Halteteil (8) von der Steuerkurve gesondert und gegenüber dieser derart winkelversetzt angeordnet ist, daß sich die Steuerkurve (6) in Förderrichtung von einem Punkt vor der Pendelachse (4) mit einer Steigung nach oben und hinten erstreckt und das als Gerade ausgebildete Halteteil (8) von der Steuerkurve gesondert und gegenüber dieser derart winkelversetzt angeordnet ist, daß die durch den Eingriff des Steuergliedes (9) in die Steuerkurve eingeleitete Kippbewegung des Bechers (1) durch das Halteteil übernommen wird, sobald es sich mit seiner nach oben weisenden Kante an die Einlaufkante einer ortsfesten Halteschiene (10) anlegt, bis es mit seiner gesamten Länge an der Unterseite der Halteschiene zur Anlage kommt.

2. Becher nach Anspruch 1, dadurch gekennzeichnet, daß die Steuerkurve (6) mit ihrem vorderen Teil als Gerade mit konstanter Steigung ausgebildet ist, welche in einen hinteren, mit einer zunehmenden Steigung versehenen Kurventeil übergeht.

3. Becher nach den Ansprüchen 1 und/oder 2,

dadurch gekennzeichnet, daß die Steigung des vorderen Kurventeils etwa 10° beträgt.

4. Becher nach Anspruch 1, dadurch gekennzeichnet, daß das Halteteil (8) auf der der Steuerkurve (6) gegenüberliegenden Becherseite (3) angeordnet ist.

5. Becher nach den Ansprüchen 1 oder 4, dadurch gekennzeichnet, daß das Halteteil (8) lösbar am Becher (1) befestigt ist.

6. Becher nach einem oder mehreren der Ansprüche 1 bis 5, dadurch gekennzeichnet, daß an der Einlaufkante der Halteschiene (10) eine Übernahmerolle (11) angeordnet ist.

**Claims**

1. Bucket of a bucket conveyor with two lateral tie elements, between which the bucket is suspended so as to execute a pendulum movement by means of an axle arranged transversely relative to the conveying direction and has a laterally arranged control cam and an associated holding part, into which a fixed control member pivotable into the path of movement of the bucket engages for the purpose of tipping the bucket, characterized in that the control cam (6) extends in the conveying direction from a point in front of the pendulum axle (4) in an incline upwards and to the rear, and the holding part (8), designed as a straight piece, is arranged separately from the control cam and offset relative to this at such an angle that the tipping movement of the bucket (1) transmitted to the control cam as a result of the engagement of the control member (9) is received by the holding part, as soon as the upward-pointing edge of the latter comes up against the run-in edge of a fixed holding rail (10), until its entire length comes to rest against the underside of the holding rail.

2. Bucket according to Claim 1, characterized in that the front part of the control cam (6) is designed as a straight line with a constant incline which merges into a rear curved part having an increasing incline.

3. Bucket according to Claims 1 and/or 2, characterized in that the incline of the front curved part is approximately 10°.

4. Bucket according to Claim 1, characterized in that the holding part (8) is arranged on the bucket side (3) located opposite the control cam (6). .

5. Bucket according to Claims 1 or 4, characterized in that the holding part (8) is fastened releaseably to the bucket (1).

6. Bucket according to one or more of Claims 1 to 5, characterized in that a receiving roller (11) is arranged on the run-in edge of the holding rail (10).

**Revendications**

1. Godet d'un transporteur à godets comportant deux éléments de traction latéraux, entre lesquels le godet est suspendu de manière oscillante au moyen d'un axe disposé transversalement à la direction de transport et comporte une came de commande disposée latéralement ainsi qu'un organe de retenue associé, dans lequel un organe ·de commande fixe pouvant pivoter dans le trajet de déplacement du godet s'engage pour faire basculer le godet, caractérisé en ce que la came de commande (6) s'étend, dans la direction de transport, à partir d'un point situé devant l'axe d'oscillation (4) et s'incline vers le haut et vers l'arrière et l'organe de retenue (8) ayant la forme d'une partie rectiligne est monté séparément de la came de commande et est disposé avec un décalage angulaire par rapport à celle-ci d'une manière telle que le mouvement de basculement du godet (1), amorcé par l'engagement de l'organe de commande (9) dans la came de commande, soit pris en charge par l'organe de retenue dès que celui-ci s'applique par son côté orienté vers le haut contre le côté d'entrée d'un rail de retenue fixe (10), jusqu'à ce qu'il vienne s'appliquer par toute sa longueur contre la face inférieure du rail de retenue.

2. Godet suivant la revendication 1, caractérisé en ce que la partie antérieure de la came de commande (6) forme une partie rectiligne de pente constante qui se raccorde à une partie de came postérieure pourvue d'une pente croissante.

3. Godet suivant les revendications 1 et/ou 2, caractérisé en ce que la pente de la partie de came antérieure est d'environ 10°.

4. Godet suivant la revendication 1, caractérisé en ce que l'organe de retenue (8) est monté sur le côté (3) du godet opposé à la came de commande (6).

5. Godet suivant la revendication 1 ou 4, caractérisé en ce que l'organe de retenue (8) est fixé de manière amovible au godet (1).

6. Godet suivant l'une quelconque des revendications 1 à 5, caractérisé en ce qu'un galet de transfert (11) est monté sur le côté d'entrée du rail de retenue (10).

FIG. 2

FIG. 1

FIG. 4

0 121 195